# EUROPÄISCHE PATENTSCHRIFT

(11) **EP 4 051 653 B1**
(45) Veröffentlichungstag und Bekanntmachung des Hinweises auf die Patenterteilung: **31.12.2025**
(21) Anmeldenummer: 20800875.5
(22) Anmeldetag: 02.11.2020
(51) Int. Cl.: C04B 35/44, C04B 35/622, H01M 10/39, C04B 35/113

(54) **HERSTELLUNG VON GRÜNKÖRPERN AUS NA-BETA-ALUMINAT**
MANUFACTURE OF GREEN COMPACTS FROM NA-BETA-ALUMINATE
FABRICATION DE COMPRIMÉS CRUS À PARTIR DE NA-BETA-ALUMINATE

(30) Priorität: 06.11.2019 DE 102019129869
(43) Veröffentlichungstag der Anmeldung: 07.09.2022
(73) Patentinhaber: Fraunhofer-Gesellschaft zur Förderung der angewandten Forschung e.V., 80686 München (DE); Rösler CeramInno GmbH, 96355 Tettau / Schauberg (DE)
(72) Erfinder: RÖSLER, Johannes, 96355 Tettau/Schauberg (DE); DIRKSEN, Cornelius, 07629 Hermsdorf (DE); SCHULZ, Matthias, 07629 Hermsdorf (DE); WEIDL, Roland, 07629 Hermsdorf (DE)
(74) Vertreter: Lorenz Seidler Gossel Part. mbB
(86) Internationale Anmeldenummer: PCT/EP2020/080680
(87) Internationale Veröffentlichungsnummer: WO 2021/089481

(56) Entgegenhaltungen:
- US-A- 4 338 272
- A.V. VIRKAR: "REPORT TITLE: A HIGH TEMPERATURE ELECTROCHEMICAL ENERGY STORAGE SYSTEM BASED ON SODIUM BETA"-ALUMINA SOLID ELECTROLYTE (BASE)", REPORT TO DOE, 31 March 2008 (2008-03-31), pages 1 - 52, XP055769827, Retrieved from the Internet <URL:https://www.osti.gov/servlets/purl/935426-HFjhDX/> [retrieved on 20210128], DOI: 10.2172/935426
- AMIN MALI ET AL: "Fabrication of a thin walled -alumina electrolyte cells", JOURNAL OF POWER SOURCES, ELSEVIER SA, CH, vol. 196, no. 11, 4 February 2011 (2011-02-04), pages 5191 - 5196, XP028369144, ISSN: 0378-7753, [retrieved on 20110212], DOI: 10.1016/J.JPOWSOUR.2011.02.021
- WILLIAM BYCKALO ET AL: "Slip Casting of ß-Al2O3 for Alkali Probes in Molten Metals", CERAMIC BULLETIN,, vol. 55, no. 8, March 1971 (1971-03-01), pages 286 - 288, XP001258564

## Beschreibung

### Technisches Feld der Erfindung

Die Erfindung betrifft die Herstellung von Grünkörpern aus Na-β-Aluminat.

### Hintergrund

Na-β-Aluminat-Keramiken finden aufgrund ihrer Eigenschaft, Natriumionen leiten zu können, beispielsweise Anwendung in Hochtemperatur-Batterien der Typen Na/S oder NaNiCI₂ und in AMTEC-Generatoren. Dabei werden einseitig verschlossene Keramikrohre aus Na-β-Aluminat mit einem Innenvolumen von etwa 200 bis 500 cm³ benötigt.

Im Stand der Technik werden die Grünkörper für diese Keramikrohre industriell durch Granulation keramischer Ausgangsstoffe mittels Herstellung einer keramischen Suspension (Schlicker), Granulation durch z.B. Sprühtrocknung und isostatisches Pressen hergestellt. Diese diskontinuierliche Technologie erfordert hohe Investitionen für ausreichend große Pressen. Auch müssen die keramischen Partikel vor der Verarbeitung aufwändig granuliert und mit geeigneten Bindemitteln versetzt werden.

Die einfache und günstige keramische Technologie des Schlickergießens konnte bisher zumindest im industriellen Maßstab nicht auf Na-β-Aluminat angewandt werden, was vor allem in der schlechten Haltbarkeit von standardmäßig verwendeten Gipsformen gegenüber basischen Na-β-Aluminat-Schlickern begründet liegt. Gängige poröse Kunststoffformen können ebenfalls nicht verwendet werden, da ihre Poren entweder nach nur wenigen Anwendungen vollständig verstopfen oder die Na-β-Aluminat-Partikel nur unzureichend zurückhalten.

Abgesehen von der Frage des Gussformmaterials lässt sich Na-β-Aluminat auch nur schwer zu einem gießfähigen wässrigen Schlicker verarbeiten. Diese Problemstellungen führten dazu, dass das kostengünstige Verfahren des Schlickergusses bisher nicht auf Na-β-Aluminat angewendet werden konnte.

In Anbetracht der genannten Problematiken wurde im Stand der Technik zur Herstellung eines gießfähigen Schlickers aus Na-β-Aluminat mit hohem Feststoffgehalt angedacht, organische Lösungsmittel statt Wasser zu verwenden. Eine weitere Möglichkeit, wässrige Schlicker aus Na-β-Aluminat herzustellen, besteht darin, den pH-Wert im Schlicker mittels Säure zu senken und so die suspendierenden Eigenschaften der Zusammensetzung zu verbessern. Beide Vorgehensweisen sind für eine Produktion aus Gründen des Brandschutzes, der Wirtschaftlichkeit und des Umweltschutzes nicht sinnvoll.

Zur Herstellung von Formen, die das Gießen von Grünkörpern aus Na-β-Aluminat erlauben, wird im Stand der Technik die Verwendung einer nur einmal verwendbaren Pulverschüttung genannt. Als Beispiel hierfür ist die US 4,338,272 A zu nennen. Aufgrund der fehlenden Möglichkeit der Wiederverwertung der Form ist dieser Lösungsvorschlag aber für eine industrielle Produktion ungeeignet.

Die KR 101 404 044 B1 offenbart ein Verfahren, in dem zunächst ein Al₂O₃-Körper im Schlickerguss hergestellt wird, der anschließend mit Natrium-Verbindungen infiltriert und gesintert wird.

### Technische Aufgabe

Vor dem genannten Hintergrund ist es eine Aufgabe der Erfindung, ein Verfahren zur Herstellung von Grünkörpern aus Na-β-Aluminat einschließlich hierfür geeigneter Schlicker und Gussformen bereitzustellen, welches die genannten Nachteile überwindet.

### Allgemeine Beschreibung der Erfindung

Vor diesem Hintergrund betrifft die Erfindung ein Verfahren zur Herstellung eines sinterfähigen Grünkörpers aus über Bindemittel verklebten Natrium-β-Aluminat- und/oder Vorläufer-Partikeln mittels Schlickerguss, wobei ein gießfähiger Schlicker, die Partikel sowie Dispergier- und Bindemittel beinhaltend, in eine Gussform eingebracht und nach Verfestigung als Grünkörper entformt wird. Erfindungsgemäß ist vorgesehen, dass die Gussform aus mit organischen und/oder anorganischen Bindern verklebten Zuschlagpartikeln besteht, wobei es sich bei dem Schlicker vorzugsweise um eine wässerige Suspension handelt.

Die idealisierte Formel von Natrium-β-aluminat ist NaAl₁₁O₁₇. Allerdings enthalten die Kristalle typischerweise mehr Natrium als durch diese Formel angegeben, was durch Aluminium-Leerstellen ausgeglichen wird, so dass sich eine reale Zusammensetzung von Na_{1,0-2,0}Al₁₀₋₁₂O₁₇ bzw. in vielen Fällen Na_{1,3}Al_{10,9}O₁₇ ergibt. Diese gewünschte Modifikation, das Natrium-β"-aluminat, kann entweder in Reinform oder in durch Einbau von beispielsweise Lithium- oder Magnesiumionen in die Kristallstruktur stabilisierter Form vorliegen, wobei sich im letztgenannten Fall reale Zusammensetzungen von Na_{1,0-2,0}Al₁₀₋₁₂Li_{0,1-1,0}O₁₇ bzw. Na_{1,0-2,0}Al₁₀₋₁₂Mg_{0,1-1,5}O₁₇ ergeben können.

In einer Variante der Erfindung können an Stelle der unstabilisierten oder stabilisierten Na-β-Aluminat-Partikel oder ergänzend zu diesen Partikeln auch Partikel aus Vorläufersubstanzen wie beispielsweise Natriumcarbonat (Na₂CO₃) und/oder Natriumhydroxid (NaOH) sowie Aluminiumoxid (Al₂O₃) und/oder Aluminiumhydroxid (Al(OH)₃) suspendiert werden, um den Masseanteil der Na-β-Aluminat-Partikel vollständig oder teilweise zu ersetzen.

Vorzugsweise haben die Na-β-Aluminat- bzw. Vorläufer-Partikel des Schlickers eine Größenverteilung mit einer Median-Korngröße (d₅₀-Wert) von unter 10 µm. Diese Korngrößen haben sich bezüglich der Schlickereigenschaften sowie der Eigenschaften des entstehenden Grünkörpers als Vorteilhaft erwiesen.

Was die Zusammensetzung des Schlickers betrifft, so kann dieser 30 - 95 Gew.-% und vorzugsweise 50 - 85 Gew.-% der Na-β-Aluminat- bzw. Vorläuferpartikel, 10 - 60 Gew.-% und vorzugsweise 25 - 45 Gew.-% Wasser und bis zu 30 Gew.-%, vorzugsweise bis zu 20 Gew.-% sonstige Bestandteile in Form von Dispergiermitteln, organischen Bindemitteln und gegebenenfalls weiteren Hilfsstoffen umfassen. Der Anteil der weiteren Hilfsstoffe beträgt vorzugsweise maximal 10 Gew.-% und weiter vorzugsweise maximal 5 Gew.-%. Die Anteile der genannten Bestandteile summieren sich auf 100 Gew.-%.

Die Dispergiermittel des Schlickers können organische Dispergiermittel wie beispielsweise Carbonsäuren oder andere organische Tenside umfassen oder daraus bestehen. Die Bindemittel des Schlickers können organische Bindemittel wie beispielsweise (Poly-)Saccharide, PVA oder Carbonsäuren umfassen oder daraus bestehen. Weiterhin kann der Schlicker auch Metalloxide wie beispielsweise Nickeloxid, Titanoxid, Manganoxid, Chromoxid, Zirkonoxid, Lithiumoxid oder Magnesiumoxid beinhalten.

Vorzugsweise ist der Schlicker frei von organischen Lösungsmitteln und/oder frei von Säure. Dies verbessert die Wirtschaftlichkeit und die Umweltfreundlichkeit.

Der Schlicker kann im Rahmen eines vorgelagerten Verfahrensschritts so hergestellt werden, dass Na-β-Aluminat- und/oder Vorläufer-Partikel mit dem Wasser sowie den Dispergier- und Bindemitteln vermischt wird. Während oder nach dem Vermischen wird der Schlicker dabei vorzugsweise durch Anlegen eines Vakuums entlüftet. Das Anlegen eines Vakuums während oder nach dem Vermischen vermeidet eine spätere Blasenbildung im Grünkörper. Das Vermischen der Na-β-Aluminat- und/oder Vorläufer-Partikel mit dem Wasser sowie den Dispergier- und Bindemitteln kann in einer Mühle erfolgen, sodass während des Vermischens gleichzeitig die Partikel zerkleinert werden. Beispielsweise kann das Vermischen in einer Trommelmühle stattfinden.

Das Material der Gussform weist in einer Ausführungsform 50 - 99 Gew.-% und vorzugsweise 70 - 90 Gew.-% Zuschlagpartikel sowie wenigstens einen anorganischen oder organischen Binder auf. Der Anteil des anorganischen Binders kann bis zu 50 Gew.-% und vorzugsweise bis zu 30 Gew.-% betragen. Der Anteil des organischen Binders kann bis zu 20 Gew.-% und vorzugsweise bis zu 15 Gew.-% betragen. Ferner können bis zu 10 Gew.-% und vorzugsweise bis zu 5 Gew.-% Hilfsstoffe und Additive vorhanden sein. Die Anteile der genannten Bestandteile summieren sich auf 100 Gew.-%. In einer bevorzugten Variante kann als Binder eine Mischung an organischen und anorganischen Bindern zum Einsatz kommen.

Bei den Zuschlagpartikeln der Gussform handelt es sich um Partikel aus Polyethylenglykol, Titanoxid, Aluminiumoxid, Natriumaluminat oder Silikat oder Mischungen daraus. Die anorganischen Binder zur Verklebung der Zuschlagpartikel in der Gussform umfassen kalkhaltige Zement-Mischungen. Die organischen Binder zur Verklebung der Zuschlagpartikel in der Gussform umfassen Epoxid-, Phenol- oder Polyesterharze und Leime.

Die Verweilzeit des Schlickers in der Gussform beträgt in einer Ausführungsvariante des Verfahrens zwischen 5 und 20 Minuten. Während des Verweilens in der Gussform kann der Schlicker in der Gussform unter Druck gesetzt werden. Während der Verweilzeit findet eine zumindest teilweise Trocknung und Verfestigung statt. Bei Bedarf wird während der Verweilzeit zusätzlicher Schlicker eingefüllt, um den Füllstand der Form konstant zu halten. Der Druck von beispielsweise 2-5 Atmosphären kann beispielsweise durch Anlegen eines Luft- bzw. Gasdrucks oder über eine in den Hohlraum der Form mündende Flüssigkeitssäule angelegt werden, wobei letztere auch mit dem Schlicker selbst befüllt sein und in Doppelfunktion auch der Ergänzung von schwindendem Volumen dienen kann. Nach Ablauf einer Verweilzeit in der Gussform oder nach dessen Entformung wird der Grünkörper typischerweise zusätzlich getrocknet, wobei diese zusätzliche Trocknung vorzugsweise unter Normaldruck stattfindet.

Bevorzugt ist mit Blick auf die eingangs beschriebenen Anwendungsfälle, dass es sich bei dem Grünkörper um einen einseitig verschlossenen Hohlkörper handelt, der vorzugsweise die Form eines einseitig verschlossenen Rohres, Hohlzylinders oder Trichters hat. Das Innenvolumen des Hohlkörpers kann beispielsweise zwischen 50 und 1500 cm³ und vorzugsweise zwischen 200 bis 500 cm³ liegen. Die Wandstärke beträgt vorzugsweise 1-4 mm, was für das Sintern ebenso wie für die spätere Anwendung sinnvoll sein kann.

Die Erfindung betrifft ferner ein Verfahren zur Herstellung eines keramischen Formkörpers aus gesinterten Natrium-β-Aluminat-Partikeln, wobei das Verfahren die Herstellung eines Grünkörpers nach einem vorstehend beschriebenen Verfahren sowie das anschließende Brennen dieses Grünkörpers umfasst. Die Natrium-β-aluminat- bzw. Vorläufer-Partikel des Grünkörpers werden im Rahmen des Brennens gesintert und die Bindemittel wird während des Aufwärmens ausgeschmolzen oder ausgegast.

Das Sintern kann drucklos oder unter Druck erfolgen. Der gesinterte Körper hat, abgesehen von einer möglichen Schrumpfung während des Sinterns, eine dem Grünkörper entsprechende Form. Die Größe des Grünkörpers kann so eingestellt werden, dass nach einer möglichen Schrumpfung letztlich das Innenvolumen des hohlen Formkörpers zwischen 50 und 1500 cm³ oder zwischen 200 bis 500 cm³ liegt.

Weiterhin betrifft die Erfindung ein Verfahren zur Herstellung einer Natrium-Hochtemperaturbatterie mit einem keramischen Elektrolyten, wobei das Verfahren die Herstellung eines keramischen Formkörpers nach dem vorstehend beschriebenen Verfahren sowie den Einsatz dieses Formkörpers als keramischer Elektrolyt umfasst. Der Formkörper dient dabei als Festelektrolyt. Beispiele für verfahrensgemäß herstellbare Natrium-Hochtemperaturbatterien umfassen Hochtemperatur-Batterien der Typen Na/S oder NaNiCl₂ sowie in AMTEC-Generatoren.

### Ausführungsbeispiel

Weitere Einzelheiten und Vorteile der Erfindung ergeben sich aus dem nachfolgend beschriebenen Ausführungsbeispiel.

### Der Na-β-Aluminat-Schlicker:

Zur Herstellung des Na-β-Aluminat-Schlickers werden Na-β-Aluminat-Partikel, Wasser und Hilfsmittel, nämlich Metalloxide, ein organischer Binder und ein organisches Dispergierungsmittel zum Vermischen und gleichzeitigen Mahlen der Partikel in eine Trommelmühle gegeben. Die Mühle wird so lange betrieben, bis eine homogene Suspension erhalten wird und der d₅₀ der Na-β-Aluminat-Partikel bei etwa 1 µm liegt. Nach dem Vermischen wird der Schlicker durch Anlegen eines Vakuums entlüftet, um später die Bildung von Blasen in der Keramik zu vermeiden.

### Die Gussform:

Zur Herstellung der Gussform wird eine gießfähige Mischung aus strukturgebenden Al₂O₃-Partikeln (Zuschlägen), Bindern und Wasser unter Vakuum entlüftet und sodann in ein Negativ der herzustellenden Gussform eingefüllt. Nach dem teilweisen Abbinden und Trocknen der Mischung wird die Gussform aus dem Negativ entnommen und weiter getrocknet.

### Die Herstellung des Grünkörpers:

Zur Herstellung eines keramischen Grünkörpers unter Verwendung des beschriebenen Schlickers und der beschriebenen Gussform wird wie folgt vorgegangen.

In einem ersten Schritt wird der Schlicker in die Gussform gefüllt. Dort verweilt dieser für eine definierte Zeit, wobei während dessen über eine in den Hohlraum der Form mündende Flüssigkeitssäule, die auch mit dem Schlicker selbst befüllt ist, Druck auf den Schlicker ausgeübt wird. Zudem dient die Flüssigkeitssäule als Reservoir, um während der Verweilzeit zusätzliche Suspension einzufüllen und den sinkenden Füllstand der Form zu kompensieren. Der nicht zur Scherbenbildung benötigte Schlicker wird nach der Verweilzeit entfernt. Der im Hohlraum der Form zurückbleibende Grünkörper wird für 12 Stunden in der Gussform getrocknet und dann entnommen.

Ein Brennen des Grünkörpers erfolgt im Anschluss bei Temperaturen von 1500°C-1600°C.

Anhand der Erfindung kann Na-β-Aluminat wässrig zu einem Schlicker verarbeitet und in einer dafür geeigneten und wiederverwendbaren Gussform gegossen werden. Durch die Anwendbarkeit des Schlickergusses ergeben sich Kostenersparnisse im Vergleich zu bekannten Verfahren auf der Grundlage von isostatischem Pressen.

## Patentansprüche

1. Verfahren zur Herstellung eines sinterfähigen Grünkörpers aus über Bindemittel verklebten Natrium-β-Aluminat- und/oder Natrium-β-Aluminat-Vorläufer-Partikeln mittels Schlickerguss, wobei ein gießfähiger Schlicker, die Partikel sowie Dispergier- und Bindemittel beinhaltend, in eine Gussform eingebracht und nach Verfestigung als Grünkörper entformt wird,
**dadurch gekennzeichnet,**
**dass** die Gussform aus mit organischen und/oder anorganischen Bindern verklebten Zuschlagpartikeln besteht, wobei es sich bei den Zuschlagpartikeln um Partikel aus Polyethylenglykol, Titanoxid, Aluminiumoxid, Natriumaluminat oder Silikat oder Mischungen daraus handelt, wobei es sich bei den organischen Bindern um Epoxy-, Phenol- oder Polyesterharze oder um Leime handelt, und wobei es sich bei den anorganischen Bindern um kalkhaltige Zement-Mischungen handelt.

2. Verfahren nach Anspruch 1, **dadurch gekennzeichnet, dass** die Na-β-Aluminat- bzw. Natrium-β-Aluminat-Vorläufer-Partikel des Schlickers eine Größenverteilung mit einer Median-Korngröße (d₅₀-Wert) von unter 10 µm haben.

3. Verfahren nach einem der vorhergehenden Ansprüche, **dadurch gekennzeichnet, dass** der Schlicker 30 - 95 Gew.-% und vorzugsweise 50 - 85 Gew.-% der Na-β-Aluminat- bzw. Natrium-β-Aluminat-Vorläuferpartikel, 10 - 60 Gew.-% und vorzugsweise 25 - 45 Gew.-% Wasser und bis zu 30 Gew.-%, vorzugsweise bis zu 20 Gew.-% sonstige Bestandteile in Form von Dispergiermitteln, organischen Bindemitteln und gegebenenfalls weiteren Hilfsstoffen umfasst.

4. Verfahren nach einem der vorhergehenden Ansprüche, **dadurch gekennzeichnet, dass** die Dispergiermittel des Schlickers organische Dispergiermittel wie beispielsweise Carbonsäuren oder andere organische Tenside umfassen oder daraus bestehen.

5. Verfahren nach einem der vorhergehenden Ansprüche, **dadurch gekennzeichnet, dass** die Bindemittel im Schlicker organische Bindemittel wie beispielsweise (Poly-)Saccharide, PVA oder Carbonsäuren umfassen oder daraus bestehen.

6. Verfahren nach einem der vorhergehenden Ansprüche, **dadurch gekennzeichnet, dass** es sich bei dem Schlicker um eine wässrige Suspension handelt, wobei der Schlicker vorzugsweise frei von organischen Lösungsmitteln und/oder frei von Säure ist.

7. Verfahren nach einem der vorhergehenden Ansprüche, **dadurch gekennzeichnet, dass** der Schlicker in einem vorgelagerten Verfahrensschritt hergestellt wird, indem Na-β-Aluminat- und/oder Natrium-β-Aluminat-Vorläufer-Partikel mit dem Wasser sowie den Dispergier- und Bindemitteln vermischt wird, wobei der Schlicker vorzugsweise während oder nach dem Vermischen wird durch Anlegen eines Vakuums entlüftet wird.

8. Verfahren nach Anspruch 9, **dadurch gekennzeichnet, dass** das Vermischen der Na-β-Aluminat- und/oder Natrium-β-Aluminat-Vorläufer-Partikel mit dem Wasser sowie den Dispergier- und Bindemitteln in einer Mühle erfolgt und dass während des Vermischens gleichzeitig die Partikel zerkleinert werden.

9. Verfahren nach einem der vorhergehenden Ansprüche, **dadurch gekennzeichnet, dass** die Gussform 50 - 99 Gew.-% und vorzugsweise 70 - 90 Gew.-% Zuschlagpartikel sowie wenigstens einen anorganischen oder organischen Binder aufweist, wobei der Anteil des anorganischen Binders bis zu 50 Gew.-% und vorzugsweise bis zu 30 Gew.-% betragen kann und der Anteil des organischen Binders bis zu 20 Gew.-% und vorzugsweise bis zu 15 Gew.-% betragen kann.

10. Verfahren nach einem der vorhergehenden Ansprüche, **dadurch gekennzeichnet, dass** die Verweilzeit des Schlickers in der Gussform zwischen 5 und 20 Minuten beträgt und/oder dass der Schlicker während des Verweilens in der Gussform unter Druck gesetzt wird.

11. Verfahren nach einem der vorhergehenden Ansprüche, **dadurch gekennzeichnet, dass** der Grünkörper nach Ablauf einer Verweilzeit in der Gussform oder nach dessen Entformung getrocknet wird, wobei die Trocknung vorzugsweise unter Normaldruck stattfindet.

12. Verfahren nach einem der vorhergehenden Ansprüche, **dadurch gekennzeichnet, dass** es sich bei dem Grünkörper um einen einseitig verschlossenen Hohlkörper handelt, der vorzugsweise die Form eines einseitig verschlossenen Rohres, Hohlzylinders oder Trichters hat.

13. Verfahren zur Herstellung eines keramischen Formkörpers aus gesinterten Natrium-β-Aluminat-Partikeln umfassend die Herstellung eines Grünkörpers nach einem der vorhergehenden Ansprüche sowie das Brennen des Grünkörpers.

14. Verfahren zur Herstellung einer Natrium-Hochtemperaturbatterie umfassend die Herstellung eines keramischen Formkörpers nach Anspruch 13 sowie den Einsatz dieses Formkörpers als keramischer Elektrolyt innerhalb der Batterie.

## Claims

1. A method for manufacturing a sinterable green body from sodium-β-aluminate- and/or sodium-β-aluminate precursor-particles bonded via binders by means of slip casting, wherein a castable slip containing the particles as well as dispersants and binders is introduced into a casting mold and, after solidification, is demolded as green body,
**characterized in that**
the casting mold consists of aggregate particles bonded with organic and/or inorganic binders, wherein the aggregate particles are particles of polyethylene glycol, titanium oxide, aluminum oxide, sodium aluminate or silicate or mixtures thereof, wherein the organic binders are epoxy-, phenolic- or polyester-resins and glues, and wherein the inorganic binders are cementitious mixtures containing lime.

2. Method according to claim 1, **characterized in that** the Na-β-aluminate- and/or precursor-particles of the slip have a size distribution with a median-grain-size (d₅₀-value) of below 10 µm.

3. Method according to any one of the preceding claims, **characterized in that** the slip comprises 30-95 wt.% and preferably 50-85 wt.% of the Na-β-aluminate- and/or precursor-particles, 10-60 wt.% and preferably 25-45 wt.% of water and up to 30 wt.%, preferably up to 20 wt.% of other constituents in the form of dispersants, organic binders and optionally further auxiliaries.

4. Method according to any one of the preceding claims, **characterized in that** the dispersants of the slip comprise or consist of organic dispersants such as carboxylic acids or other organic surfactants.

5. Method according to any one of the preceding claims, **characterized in that** the binders in the slip comprise or consist of organic binders such as, for example, (poly)saccharides, PVA or carboxylic acids.

6. Method according to any one of the preceding claims, **characterized in that** the slip is an aqueous solution, wherein the slick is preferably free of organic solvents and/or free of acid.

7. Method according to any one of the preceding claims, **characterized in that** the slip is prepared in an upstream method step by mixing Na-β-aluminate- and/or Na-β-aluminate precursor-particles with the water and the dispersants and binders, wherein the slip preferably is deaerated by applying a vacuum during or after mixing.

8. Method according to claim 9, **characterized in that** the mixing of the Na-β-aluminate- and/or precursor-particles with the water as well as the dispersants and binders is carried out in a mill and that during the mixing the particles are simultaneously comminuted.

9. Method according to any one of the preceding claims, **characterized in that** the casting mold comprises 50-99 wt.% and preferably 70-90 wt.% of aggregate particles and at least one inorganic or organic binder, wherein the proportion of the inorganic binder may be up to 50 wt.% and preferably up to 30 wt.% and the proportion of the organic binder may be up to 20 wt.% and preferably up to 15 wt.%.

10. Method according to any one of the preceding claims, **characterized in that** the dwell time of the slip in the casting mold is between 5 and 20 minutes and/or **in that** the slip is pressurized during dwelling in the casting mold.

11. Method according to any one of the preceding claims, **characterized in that** the green body is dried after expiry of a dwell time in the casting mold or after demolding thereof, the drying preferably taking place under normal pressure.

12. Method according to any one of the preceding claims, **characterized in that** the green body is a hollow body closed on one side, preferably in the form of a tube, hollow cylinder or funnel closed on one side.

13. Method for manufacturing a ceramic molded body from sintered sodium-β-aluminate-particles, comprising manufacturing a green body according to any one of the preceding claims and firing the green body.

14. Method for manufacturing a sodium-high-temperature-battery comprising manufacturing a ceramic molded body according to claim 13 and using said molded body as a ceramic electrolyte within said battery.

## Revendications

1. Procédé de fabrication d'un corps vert frittable à partir de particules de β-aluminate de sodium et/ou de précurseur de β-aluminate de sodium collées par l'intermédiaire d'un liant, au moyen d'une coulée en barbotine, dans lequel une barbotine apte à la coulée, contenant les particules ainsi que des agents dispersants et liants, est introduite dans un moule de coulée et est démoulée après solidification sous forme de corps vert,
**caractérisé en ce que**
le moule de coulée est constitué de particules d'agrégat collées avec des liants organiques et/ou inorganiques, les particules d'agrégat consistant en des particules de polyéthylène glycol, d'oxyde de titane, d'oxyde d'aluminium, d'aluminate de sodium ou de silicate ou des mélanges de ceux-ci, les liants organiques consistant en des résines époxy, phénoliques ou de polyester ou en des colles, et les liants inorganiques consistant en des mélanges de ciment contenant de la chaux.

2. Procédé selon la revendication 1, **caractérisé en ce que** les particules de β-aluminate de sodium et/ou de précurseur de β-aluminate de sodium de la barbotine ont une distribution de taille avec une taille de grain médiane (valeur d₅₀) inférieure à 10 µm.

3. Procédé selon l'une quelconque des revendications précédentes, **caractérisé en ce que** la barbotine comprend de 30 à 95 % en poids, et de préférence de 50 à 85 % en poids, de particules de β-aluminate de sodium et/ou de précurseur de β-aluminate de sodium, de 10 à 60 % en poids, et de préférence de 25 à 45 % en poids, d'eau et jusqu'à 30 % en poids, et de préférence jusqu'à 20 % en poids, d'autres constituants sous forme d'agents dispersants, de liants organiques et éventuellement d'autres adjuvants.

4. Procédé selon l'une quelconque des revendications précédentes, **caractérisé en ce que** les agents dispersants de la barbotine comprennent ou sont constitués d'agents dispersants organiques tels que des acides carboxyliques ou d'autres tensioactifs organiques.

5. Procédé selon l'une quelconque des revendications précédentes, **caractérisé en ce que** les liants dans la barbotine comprennent ou sont constitués de liants organiques tels que par exemple des (poly)saccharides, des PVA ou des acides carboxyliques.

6. Procédé selon l'une quelconque des revendications précédentes, **caractérisé en ce que** la barbotine consiste en une suspension aqueuse, la barbotine étant de préférence exempte de solvants organiques et/ou exempte d'acide.

7. Procédé selon l'une quelconque des revendications précédentes, **caractérisé en ce que** la barbotine est préparée dans une étape de procédé préalable, en mélangeant des particules de β-aluminate de sodium et/ou de précurseur de β-aluminate de sodium avec l'eau ainsi que les agents dispersants et liants, la barbotine étant de préférence désaérée par application d'un vide pendant ou après le mélange.

8. Procédé selon la revendication 9, **caractérisé en ce que** le mélange des particules de β-aluminate de sodium et/ou de précurseur de β-aluminate de sodium avec l'eau ainsi que les agents dispersants et liants est effectué dans un broyeur et **en ce que**, pendant le mélange, les particules sont simultanément broyées.

9. Procédé selon l'une quelconque des revendications précédentes, **caractérisé en ce que** le moule de coulée présente 50 à 99 % en poids, et de préférence 70 à 90 % en poids, de particules d'agrégat ainsi qu'au moins un liant inorganique ou organique, la proportion du liant inorganique pouvant aller jusqu'à 50 % en poids, et de préférence jusqu'à 30 % en poids, et la proportion du liant organique pouvant aller jusqu'à 20 % en poids, et de préférence jusqu'à 15 % en poids.

10. Procédé selon l'une quelconque des revendications précédentes, **caractérisé en ce que** le temps de séjour de la barbotine dans le moule de coulée est compris entre 5 et 20 minutes et/ou **en ce que** la barbotine est mise sous pression pendant le séjour dans le moule de coulée.

11. Procédé selon l'une quelconque des revendications précédentes, **caractérisé en ce que** le corps vert est séché après l'écoulement d'un temps de séjour dans le moule de coulée ou après son démoulage, le séchage s'effectuant de préférence sous pression normale.

12. Procédé selon l'une quelconque des revendications précédentes, **caractérisé en ce que** le corps vert consiste en un corps creux fermé d'un côté, qui a de préférence la forme d'un tube, d'un cylindre creux ou d'un entonnoir fermé d'un côté.

13. Procédé de fabrication d'un corps moulé en céramique à partir de particules de β-aluminate de sodium frittées, comprenant la fabrication d'un corps vert selon l'une quelconque des revendications précédentes ainsi que la cuisson du corps vert.

14. Procédé de fabrication d'une batterie au sodium à haute température, comprenant la fabrication d'un corps moulé en céramique selon la revendication 13 ainsi que l'utilisation de ce corps moulé en tant qu'électrolyte céramique à l'intérieur de la batterie.
